# FASCICULE DE BREVET EUROPEEN

(11) **EP 1 375 111 B1**
(45) Date de publication et mention de la délivrance du brevet: **24.12.2008**
(21) Numéro de dépôt: 03362007.1
(22) Date de dépôt: 11.06.2003
(51) Int. Cl.: B29C 53/82, B64D 33/02, B64F 5/00, F01D 25/28, F02C 7/04

(54) **Outillage de moulage à clef notamment pour la réalisation d'entrée d'air sans éclisse**
Segmentiertes Formwerkzeug, insbesondere zum Herstellen eines Lufteinlasses ohne Verbindungslasche
Segmented mould, particularly for the manufacturing of an air intake without connecting link

(30) Priorité: 27.06.2002 FR 0208014
(43) Date de publication de la demande: 02.01.2004
(73) Titulaire: AIRBUS France, 31060 Toulouse Cedex (FR)
(72) Inventeur: Buge, Michel, 44230 Saint Sebastien sur Loire (FR); Lalane, Jacques, 31650 Saint Orens (FR); Porte, Alain, 31770 Colomiers (FR); Rambaud, Eric, 44840 Les Sorinieres (FR)
(74) Mandataire: Thébault, Jean-Louis

(56) Documents cités:
- DE-A- 1 504 597
- DE-A- 2 259 690
- DE-A- 2 352 373
- DE-B- 1 262 570
- US-A- 1 835 986

## Description

La présente invention se rapporte à la fabrication d'entrées d'air de nacelles contenant le groupe motopropulseur, notamment un moteur à réaction, d'aéronefs.

La nacelle a une section sensiblement annulaire et définit entre elle et la partie centrale du moteur un canal annulaire dit de soufflante.

La paroi de la nacelle définissant ce canal de soufflante est traitée acoustiquement et constituée d'un sandwich formé d'une âme centrale alvéolaire flanquée, côté canal de soufflante, d'une couche acoustiquement résistive et, de l'autre côté, d'un réflecteur total.

Cette paroi est habituellement formée de plusieurs secteurs ou segments, généralement quatre ou trois, aboutés par éclissage pour constituer un conduit sensiblement annulaire.

On sait également réaliser des entrées d'air à l'aide de deux panneaux éclissés, sensiblement semi-circulaire en section, à l'aide d'un moule ayant la forme d'une moitié d'entrée d'air. Cette technologie pourrait être poussée à sa limite en vue de réaliser un panneau de canal de soufflante non seulement monobloc mais sans éclisse, si la forme d'un tel panneau permettait le démoulage sans démontage ou destruction du moule, ce qui n'est pas le cas, la paroi d'un canal de soufflante étant presque toujours une surface en contre-dépouille.

Les documents DE 2 259 690 et US-A-1 835 986 décrivent des outillages comportant un mandrin pourvu de secteurs, aboutés par éclissage pour constituer un conduit sensiblement annulaire, articulés rétractables vers le centre dudit mandrin et un secteur dénommé secteur-clef indépendant des deux autres secteurs et insérable entre ces derniers, en sorte, par aboutage, de déterminer, par leur face externe, une surface continue correspondant à la face interne de l'entrée d'air et des moyens pour verrouiller en position aboutée lesdits secteurs manoeuvrés par un dispositif de commande solitaire des outillages.

La présente invention perfectionne ce type d'outillage en proposant des moyens pour rendre le mandrin auto-portant et prévoit un dispositif de commande désolidarisable du mandrin.

La présente invention a précisément pour but de proposer un outillage de moulage à clef permettant la réalisation notamment d'entrée d'air sans éclisse.

Dans la présente description, une entrée d'air sans éclisse est formée d'un panneau de forme sensiblement tubulaire constitué d'un sandwich comprenant une âme centrale alvéolaire, un réflecteur total et une couche résistive disposée sur la face interne du panneau, ladite face interne ne comportant pas de raccord ni d'éclisse pouvant perturber l'amortissement acoustique du panneau.

A cet effet, l'invention a pour objet un outillage de moulage à clef pour la réalisation en particulier d'entrée d'air sans éclisse de forme sensiblement tubulaire comprenant :
- un mandrin auto-portant à clef comprenant au moins trois secteurs en forme de panneaux, à savoir au moins deux secteurs articulés rétractables vers le centre dudit mandrin et un secteur dénommé secteur-clef indépendant des deux autres secteurs et insérable entre ces derniers, en sorte, par aboutage, de déterminer, par leur face externe, une surface continue correspondant à la face interne de l'entrée d'air ;
- des moyens pour verrouiller en position aboutée lesdits secteurs ;
- et, un dispositif de commande, désolidarisable du mandrin, de préférence automatique du déplacement relatif des secteurs mobiles pour les placer, soit dans une position de moulage par aboutage des secteurs, soit dans une position de démoulage par rétraction desdits secteurs vers l'intérieur du mandrin.

Suivant un mode de réalisation préférée, l'outillage comprend:
- un mandrin à clef comprenant quatre secteurs, à savoir un secteur fixe et flanqué de deux autres secteurs symétriques et articulés sur le secteur fixe, et un secteur-clef indépendant des autres et insérable entre les deux secteurs articulés et des moyens pour verrouiller en position aboutée les secteurs, le mandrin étant ainsi auto-portant;
- un dispositif de commande du déplacement relatif des secteurs pour les placer soit dans une position de moulage par aboutage de tous les secteurs, soit dans une position de démoulage par rétraction des trois secteurs mobiles vers l'intérieur dudit mandrin, le dispositif de commande étant désolidarisable du mandrin, et,
- des moyens permettant le transport et la mise en rotation du mandrin dans sa position de moulage, constitués de deux flasques amovibles adaptables aux deux extrémités du mandrin, lesdits flasques étant reliés par des tirants de fixation et munis en leur centre d'une douille ou analogue de liaison à des moyens d'entraînement dudit mandrin en rotation autour de son axe.

Le dispositif de commande de déplacement des secteurs est constitué par exemple d'une structure de réception du mandrin en position axiale verticale comprenant :
- des premiers moyens fixes sur lesquels repose le secteur fixe
- des deuxièmes moyens, mobiles, sur lesquels repose le secteur-clef, ces moyens étant déplaçables diamétralement au mandrin,
- et des troisièmes et quatrièmes moyens, mobiles, de support respectivement des deux secteurs articulés, lesdits troisièmes et quatrièmes moyens comprenant chacun un chariot mobile intérieurement au mandrin et portant un moyen d'entraînement sur lequel repose l'un desdits secteurs articulés.

Un tel mandrin, une fois en forme, c'est à dire avec les panneaux-secteurs aboutés et verrouillés et muni de ses flasques, peut être placé à l'horizontale sur un dispositif d'entraînement en rotation en vue par exemple du placement par drapage, bobinage ou banderolage du ou des éléments constitutifs de la couche acoustiquement résistive d'un panneau de canal de soufflante monobloc sans éclisse, puis de la mise en place des autres éléments constitutifs du panneau.

Aux fins de polymérisation, soit de la seule couche résistive, soit de l'ensemble des sandwichs constituant le panneau ainsi qu'éventuellement pour effectuer des étapes de cuisson ou de soudure en complément de ladite polymérisation, le mandrin est récupéré et placé en étuve ou en autoclave, après retrait ou non des flasques.

Pour récupérer en final le panneau, les flasques sont (éventuellement) remis en place sur le mandrin qui est alors mis en position verticale sur le dispositif de montage/démontage du mandrin.

Le dispositif est, après déverrouillage du secteur-clef, actionné de manière, en premier lieu, à déplacer en translation vers l'intérieur le secteur-clef, puis, en second lieu, à faire pivoter vers l'intérieur les deux secteurs articulés de façon à désolidariser ces trois secteurs du panneau d'entrée d'air réalisé, lequel peut alors être aisément retiré.

Le dispositif peut ensuite être actionné par un processus inverse pour reconstituer un mandrin en forme pour réaliser un autre panneau.

D'autres caractéristiques et avantages ressortiront de la description qui va suivre d'un mode de réalisation du mandrin et de ses outillages associés, description donnée à titre d'exemple uniquement et en regard des dessins annexés sur lesquels :
- Figure 1 est une vue schématique en perspective de dessus d'un mandrin en forme selon l'invention :

- Figure 2 est une vue identique à celle de la figure 1, montrant la face interne du mandrin non visible sur la figure 1;
- Figure 3 est une vue du mandrin de la figure 2 en position rétractée de démoulage ;
- Figure 4 représente le mandrin des figures 1 et 2 muni de ses flasques de transport et de montage sur un dispositif de mise en rotation du mandrin et sur lequel par exemple est déposée une couche résistive ;
- Figure 5 représente le mandrin de la figure 4 sans ses flasques, reposant sur un berceau, en vue d'une mise en autoclave ;
- Figure 6 représente en vue partielle et en perspective un exemple de structure d'un mandrin selon l'invention ;
- Figure 7 est une vue de détail de la structure de la figure 6;
- Figure 8 est une vue de dessus du secteur-clef du mandrin de la figure 6 au droit de la jonction entre le secteur-clef et l'un des secteurs adjacents ;
- Figure 9 est une vue en perspective de l'outillage conçu pour permettre la modification du mandrin de la configuration de moulage de la figure 2 à la configuration de démoulage de la figure 3;
- Figure 10 représente l'outillage de la figure 9 avec, en place, le mandrin, partiellement représenté ;
- Figure 11 est une vue de détail des moyens de commande de verrouillage du secteur-clef,
- Figure 12 est une vue de détail de la commande de déplacement d'un chariot de l'outillage de la figure 9;
- Figure 13 illustre la réalisation d'un mandrin à l'aide de trois secteurs et,
- Figure 14 illustre la réalisation d'un mandrin à cinq secteurs.

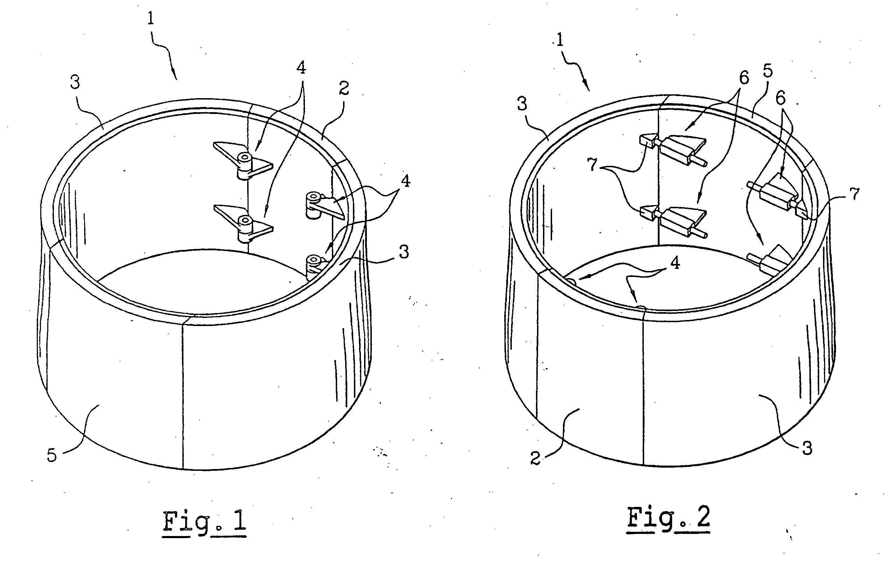

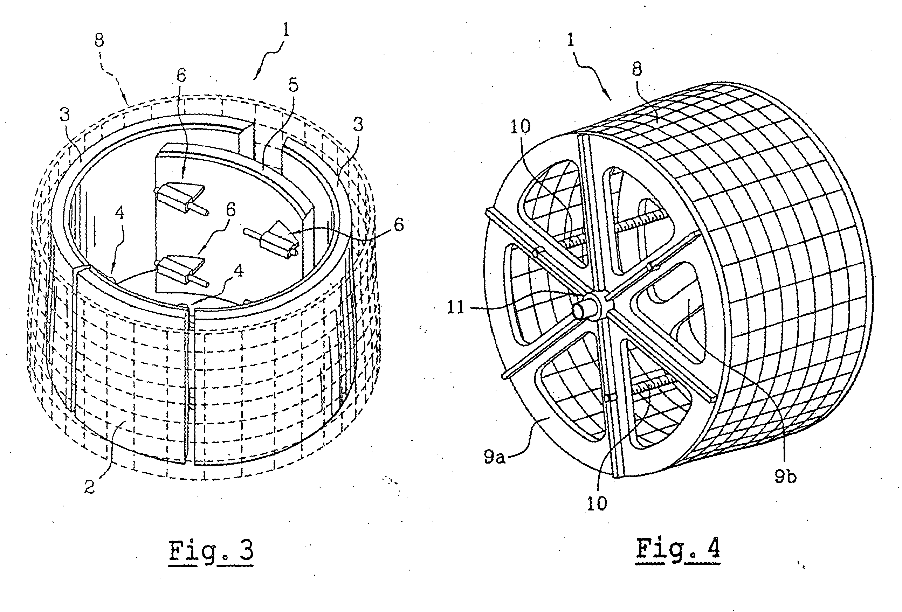

Sur les figures 1 à 3, on a représenté schématiquement un mandrin à clef 1 conforme à l'invention, respectivement dans sa configuration de moulage (Figures 1 et 2) et dans sa configuration de démoulage (figure 3).

Le mandrin 1 est de forme générale tubulaire et constitué de quatre tronçons ou secteurs, à savoir un secteur dit fixe 2 de part et d'autre duquel sont associés deux secteurs 3, identiques, dits secteurs articulés du fait qu'ils sont reliés au secteur fixe 2 chacun par une paire de charnières 4.

Le quatrième secteur 5, dénommé secteur-clef, est un secteur indépendant s'intercalant entre les deux secteurs articulés 3. Il est verrouillable en place sur les deux secteurs 3 adjacents par des verrous 6 (figure 2) solidaires du secteur-clef 5 et coopérant avec des gâches 7 fixées sur les secteurs 3 en regard des pênes des verrous 6.

Les secteurs 2, 3, 5, en position de moulage du mandrin 1, définissent une face externe qui correspond à la paroi interne en contact avec l'écoulement d'air qui pénètre dans le canal de soufflante, du panneau d'entrée d'air à réaliser.

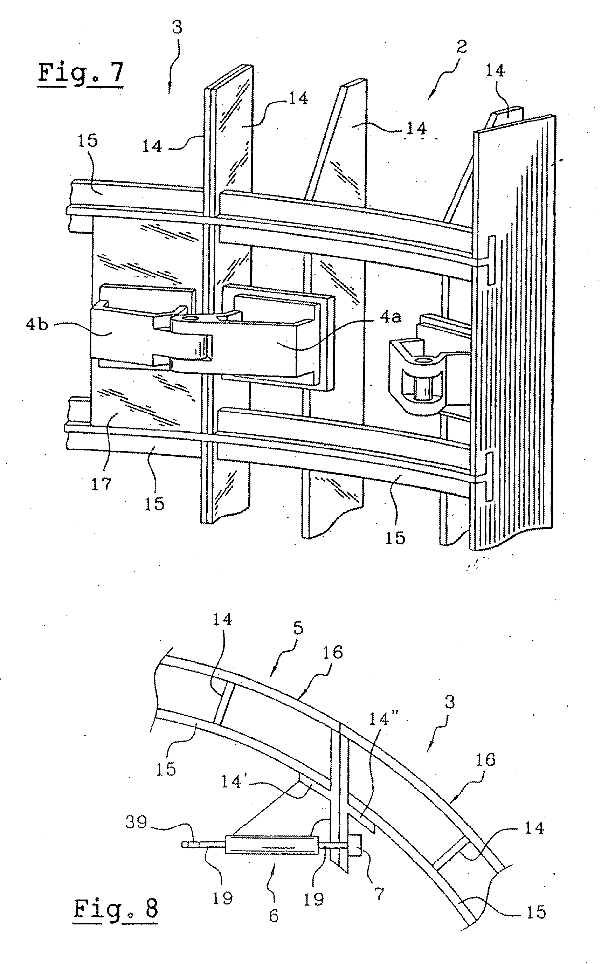

La mise en configuration de démoulage (figure 3) du mandrin s'effectue par un retrait vers l'intérieur du secteur-clef 5, après déverouillage des verrous 6, puis rabattement vers l'intérieur des secteurs articulés 3 par rotation autour de l'axe des charnières 4. L'outillage nécessaire à cette opération sera décrit plus loin en référence aux figures 8 à 11.

La figure 4 représente le mandrin 1 des figures 1 et 2 sur lequel a été mis en place par exemple par bobinage, banderolage ou drapage une couche résistive 8 constituant l'un des éléments d'un panneau d'entrée d'air sans éclisse au sens défini plus haut.

Le mandrin 1 est enserré entre deux flasques d'extrémité 9a, 9b, reliés par des tirants 10, les flasques prenant appui par leur périphérie sur la tranche des secteurs.

Dans l'axe du mandrin 1, sur la face externe des flasques 9a, 9b, sont agencées des douilles 11 permettant le transport du mandrin et sa mise en place sur un dispositif d'entraînement en rotation (non représenté) du mandrin 1 autour de son axe disposé par exemple à l'horizontale.

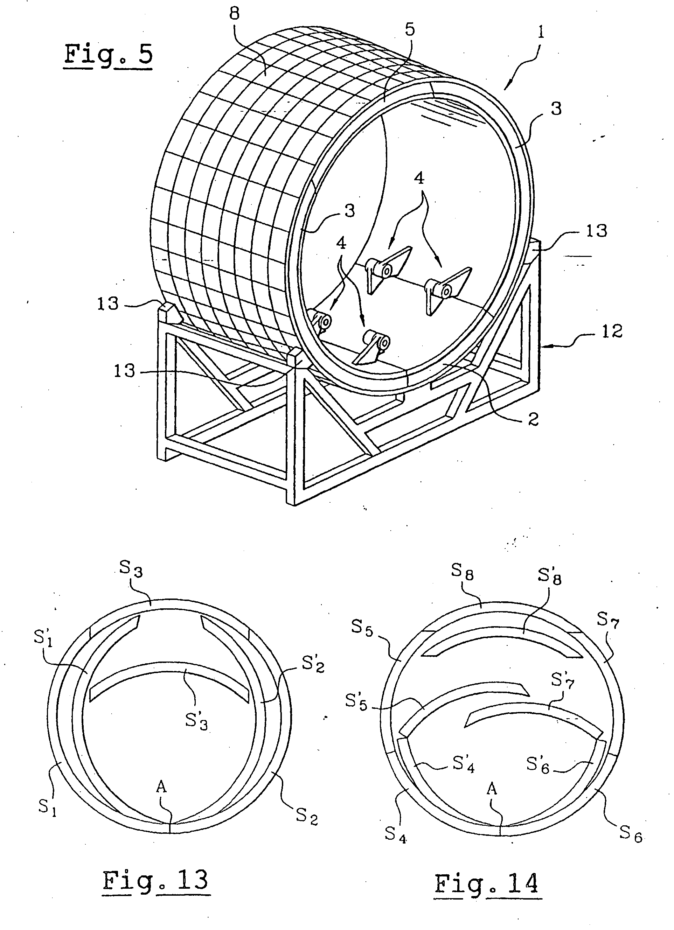

Le figure 5 représente le mandrin 1 de la figure 4, débarrassé de ses flasques 9a, 9b et en place sur un berceau 12 en vue d'un passage par exemple en étuve ou en autoclave pour polymériser la résine de la couche résistive 8. Le mandrin 1 repose sur des patins périphériques 13. Il est cependant à noter que le mandrin 1 peut passer en étuve ou en autoclave sans être débarrassé au préalable de ses flasques.

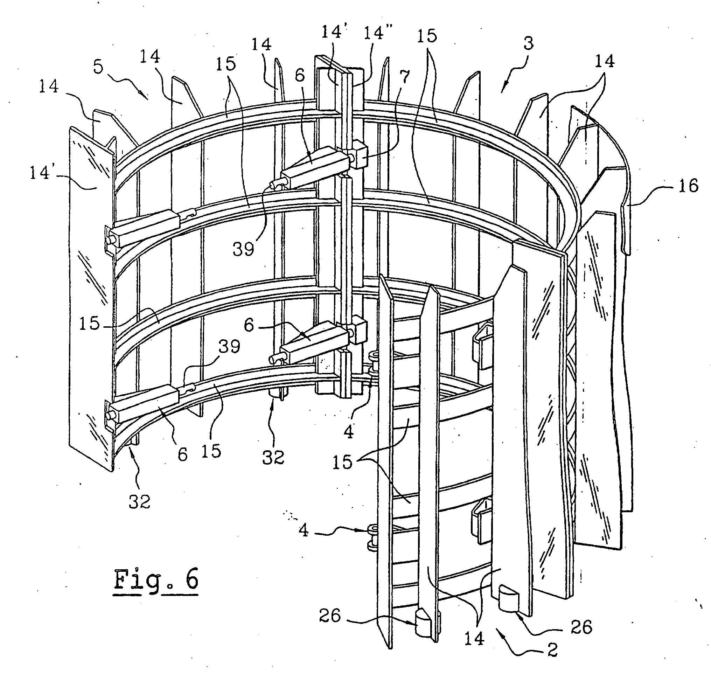

Les figures 6 à 8 illustrent un mode de réalisation de la structure des secteurs du mandrin 1.

Sur la figure 6, on a représenté un secteur fixe 2, un secteur articulé 3 et un secteur-clef 5, tous constitués d'une armature formée de montants parallèles 14 reliés entre eux, côté intérieur, par des traverses parallèles 15 cintrées et, côté extérieur, par un voile mince 16 dont la face externe définit la surface de moulage du mandrin.

Les verrous 6 du secteur-clef 5 sont fixés sur des montants latéraux renforcés 14' et coopérant avec des gâches 7 également fixée sur des montants latéraux renforcés 14" du secteur articulé 3.

Par ailleurs, comme on peut l'observer sur la figure 7, les deux éléments 4a, 4b de chaque charnière 4 d'articulation entre les secteurs 2 et 3 sont fixés, d'une part (4a) sur les montants 14 du secteur fixe 2 et, d'autre part (4b) sur une plaque 17 reliant deux traverses 15 du secteur 3.

La figure 8 est une vue de dessus partielle de la structure de la figure 6, à la jonction entre le secteur clef 5 et l'un des secteurs articulés 3.

Le verrou 6 est porté par une platine 18 elle-même fixée au montant latéral 14' du secteur-clef 5.

Le pêne 19 du verrou traverse la paroi du montant 14' et celle du montant latéral 14" du secteur 3 et s'engage dans la gâche 7.

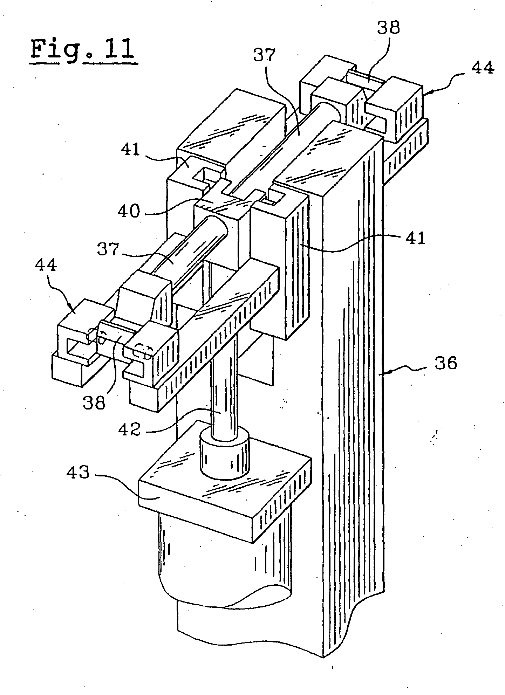

Le pêne 19 est déplacé à l'aide de moyens décrits plus loin en référence à la figure 11.

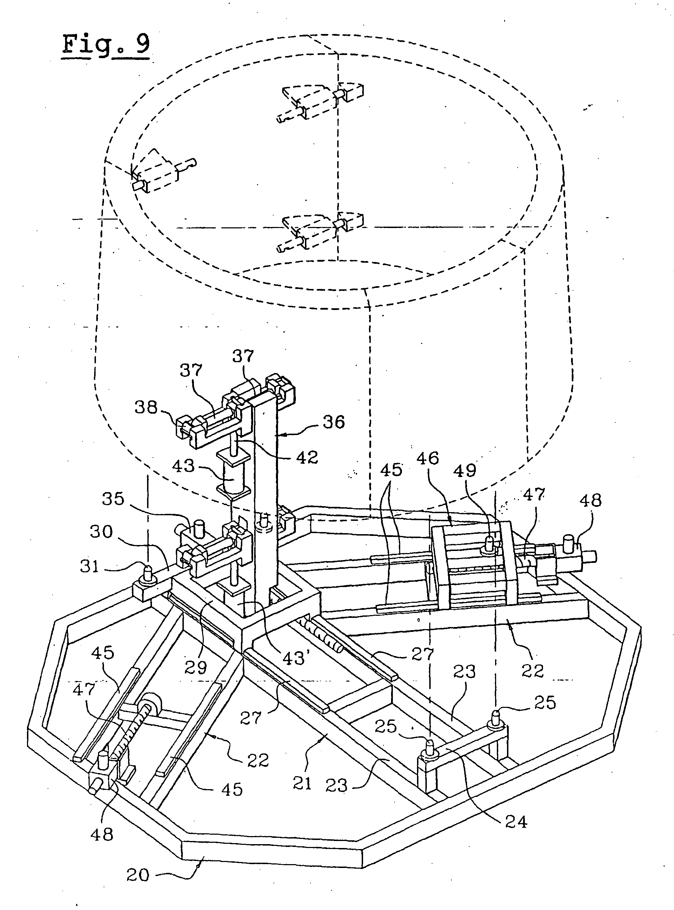

Les figures 9 à 12 représentent un mode de réalisation des moyens aptes à mettre le mandrin 1 dans l'une ou l'autre des configurations de moulage (figure 1) et de démoulage (figure 3).

Ces moyens comprennent un châssis tubulaire en acier 20 de forme générale octogonale, définissant un premier chemin de déplacement 21 diamétral à la structure octogonale, flanqué de deux chemins de déplacement 22, symétriques, convergeant en direction sensiblement de l'une des extrémités dudit premier chemin 21.

Le chemin 21 est défini par deux poutres horizontales parallèles 23.

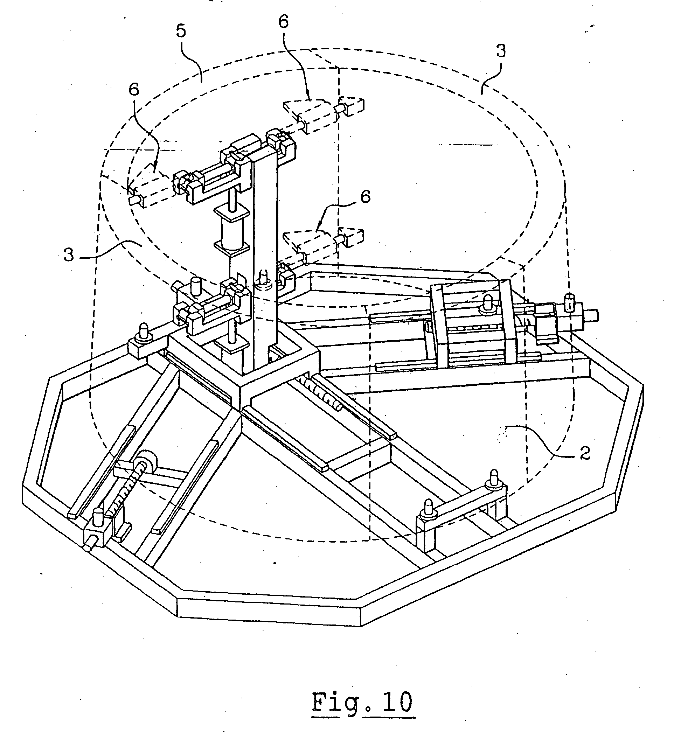

A l'une des extrémités du chemin 21, est fixée sur les poutres 23 une traverse 24 portant deux pions 25 destinés à supporter et centrer en position verticale le secteur fixe 2 du mandrin. A cet effet, en partie inférieure du secteur 2 (figure 6) sont disposées, à l'extrémité de deux montants 14, des douilles 26 susceptibles de venir s'engager sur les pions 25, comme illustré par la figure 10.

A partir de l'autre extrémité des poutres 23 et sur leur face supérieure sont fixées deux rails 27 s'étendant sensiblement sur un peu plus de la moitié de la longueur desdites poutres.

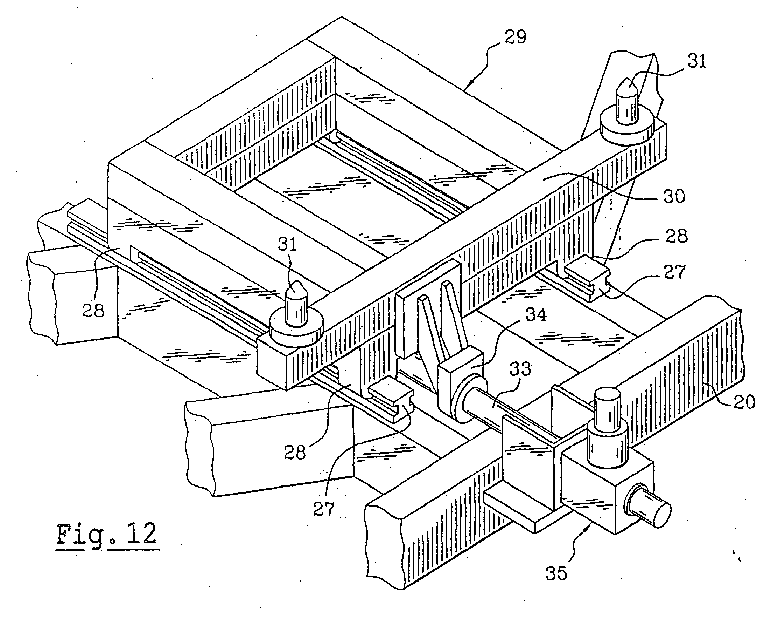

Sur les rails 27 circule, par l'intermédiaire de patins 28 (figure 12), un chariot 29 dont l'extrémité (côté extérieur) porte une traverse 30 munie de deux pions 31 de support et centrage, analogues aux pions 25 et destinés à recevoir des douilles 32, analogues aux douilles 26, prévues à l'extrémité inférieure (figure 6) de montants 14 du secteur-clef 5.

Le chariot 29 est mû par une vis 33 entraînant une noix 34 solidaire du chariot 29.

La vis 33 tourillonne dans le châssis 20 et est munie à son extrémité externe d'un renvoi d'angle 35 pour une commande de la vis soit manuellement, soit par une visseuse pneumatique.

Le chariot 29 porte une potence 36 supportant deux dispositifs d'actionnement des deux paires de verrous 6. La figure 11 représente plus en détail le dispositif d'actionnement de la paire supérieure de verrous du secteur-clef 5.

Chaque dispositif comprend une tringlerie de commande de type genouillère constituée de deux renvois latéraux 37 dont les extrémités en forme de crochet 38 coopèrent avec les extrémités complémentaires 39 (figures 6 et 8) des pênes 19 des verrous 6.

Les verrous 37 sont articulés sur une chape 40 mobile verticalement dans des glissières 41 de guidage fixées à la potence 36, sous l'action de la tige 42 d'un vérin 43 également fixé à la potence.

Les extrémités 38 des renvois 37 sont maintenus par des guides 44 solidaires de la potence 36.

Au pied de la potence est disposé, fixé au chariot 29, un second vérin 43' (figure 9) d'actionnement des verrous 6 inférieurs par un mécanisme identique à celui de la figure 11.

Chaque chemin 22 comporte deux poutres parallèles portant deux rails 45 sur lesquels circule par l'intermédiaire de patins un chariot 46 mû, comme le chariot 29, à l'aide d'une vis 47 munie d'un renvoi d'angle 48.

Chaque chariot 46 porte un pion d'entraînement et guidage 49 susceptible d'être reçu dans une gorge appropriée (non représentée) ménagée à l'extrémité inférieure de chaque secteur articulé 3.

Sur la figure 10, on a représenté partiellement le mandrin 1 en position de moulage, à l'aplomb de sa position de repos sur le châssis 20. Le mandrin est simplement posé sur les pions 25 (secteur fixe 2), sur les pions 31 (secteur-clef 5) et sur les pions 49 (secteurs articulés 3), les chariots 29 et 46 étant dans l'une de leurs deux positions extrêmes sur leur chemin de déplacement respectif 21 et 22.

Dans cette position du chariot 29, les renvois 37 des dispositifs d'actionnement des verrous 6 se trouvent dans le plan vertical défini par les quatre verrous 6.

Pour passer dans la position de démoulage du mandrin 1 de la figure 3, on commande le déverrouillage des verrous 6 en rétractant la tige des vérins 43, 43', puis on déplace le chariot 29 en direction du centre du châssis 20, les chariots 46 étant toujours immobiles et verrouillés.

Lorsque le chariot 29 a atteint sa position de retrait maximal, et même un peu avant que cette position soit atteinte, on peut actionner les chariots 46, simultanément ou non, pour faire pivoter vers l'intérieur les secteurs articulés 3 par rotation autour de l'axe des charnières 4, les secteurs étant entraînés par les pions 49.

Les secteurs du mandrin étant ainsi positionnés, il est aisé de retirer l'enveloppe moulé 8 (figure 3).

Les vis 33 et 47 sont de préférence commandées automatiquement par un dispositif de pilotage (non représenté) synchronisant les déplacements des chariots 29, 46 pour accélérer la manoeuvre, mais lesdites vis 33, 47 peuvent être commandées manuellement à l'aide de manivelle par exemple.

Pour reconstituer le moule, on procède à l'enchaînement inverse des mouvements.

Une fois le mandrin en forme, on peut, après blocage des verrous 6, désolidarise les dispositifs de commande (37, 38) desdits verrous et enlever du châssis 20 le mandrin 1 qui est auto-portant grâce au secteur-clef 5 verrouillé, pour l'équiper des flasques 9a, 9b de transport et rotation.

Le mandrin 1 est replacé sur le châssis 20, soit après polymérisation de la couche résistive afin de récupérer cette dernière, les autres éléments du sandwich définissant le panneau d'entrée d'air étant mis en place suivant d'autres techniques, soit après polymérisation finale dudit sandwich, afin de récupérer le panneau pour sa finition, tous les éléments du panneau étant mis en place sur le mandrin de départ.

On vient de décrire ci-dessus un mode de réalisation préféré du mandrin à clef, mais il est à noter que le mandrin selon l'invention peut comporter un nombre de secteurs différents de quatre, à savoir au moins trois secteurs, ou un nombre supérieur, notamment cinq secteurs.

Dans la version trois secteurs, illustrée par la figure 13, deux secteurs S1 et S2 sont articulés l'un sur l'autre autour d'un axe fixe A de rotation et le troisième secteur S3 formant secteur-clef est indépendant et mobile et peut s'insérer entre les deux autres en position déployée pour constituer par aboutage une surface continue correspondant à la face interne d'une entrée d'air. En position de démoulage, le secteur-clef S3 est d'abord déplacé vers le centre du mandrin (position S'3), puis les secteurs S1, S2 sont repliés l'un vers l'autre (positions S'1, S'2).

Dans la version cinq secteurs, illustrée par la figure 14, quatre secteurs S4 à S7 sont articulés entre eux de manière symétrique autour d'un axe fixe A de rotation et le cinquième secteur S8 est un secteur-clef indépendant mobile diamétralement au mandrin.

En position de moulage, les secteurs S4 à S7 sont aboutés. En position de démoulage du mandrin, les secteurs articulés S4 à S7 sont d'abord repliés vers le centre du mandrin comme illustré en S'4 à S'7 sur la figure 14, puis le secteur-clef S8 est déplacé vers le centre du mandrin en S'8.

D'une manière générale, et quel que soit le nombre de secteurs, le mandrin comprend un secteur-clef indépendant et mobile, les autres secteurs étant articulés entre eux ou mobiles en sorte de se rétracter vers l'intérieur du mandrin.

## Revendications

1. Outillage de moulage à clef pour la réalisation en particulier d'entrée d'air sans éclisse de forme sensiblement tubulaire, comprenant:
- un mandrin à clef comprenant au moins trois secteurs en forme de panneaux, à savoir au moins deux secteurs (S1, S2) articulés rétractables vers le centre dudit mandrin et un secteur dénommé secteur-clef (S3) indépendant des deux autres secteurs et insérable entre ces derniers, en sorte, par aboutage, de déterminer, par leur face externe, une surface continue correspondant à la face interne de l'entrée d'air ;
- des moyens pour verrouiller en position aboutée lesdits secteurs (S1 à S3) ;
- et, un dispositif de commande du déplacement relatif des secteurs mobiles pour les placer, soit dans une position de moulage par aboutage des secteurs, soit dans une position de démoulage (S'1 à S'3) par rétraction desdits secteurs vers l'intérieur du mandrin, **caractérisé en ce que**:
- le mandrin est un mandrin auto-portant et **en ce que** le dispositif de commande est désolidarisable du mandrin.

2. Outillage suivant la revendication 1, **caractérisé en ce qu'**il comprend :
- un mandrin à clef (1) comprenant quatre secteurs, à savoir un secteur (2) fixe et flanqué de deux autres secteurs (3) symétriques et articulés sur le secteur fixe (2), et zon secteur-clef (5) indépendant des autres et insérable entre les deux secteurs articulés (3) et des moyens (6,7) pour verrouiller en position aboutée les secteurs, le mandrin étant ainsi auto-portant ;
- un dispositif (29 à 35 ; 45 à 49) de commande du déplacement relatif des secteurs (3,5) pour les placer soit dans une position de moulage par aboutage de tous les secteurs (2,3,5), soit dans une position de démoulage par rétraction des trois secteurs mobiles (3,5) vers l'intérieur dudit mandrin (1), le dispositif de commande étant désolidarisable du mandrin et,
- des moyens permettant le transport et la mise en rotation du mandrin (1) dans sa position de moulage, constitués de deux flasques amovibles (9a, 9b) adaptables aux deux extrémités du mandrin, lesdits flasques étant reliés par des tirants de fixation (10) et munis en leur centre d'une douille (11) ou analogue de liaison à des moyens d'entraînement dudit mandrin en rotation autour de son axe.

3. Outillage suivant la revendication 2, **caractérisé en ce que** ledit dispositif de commande de déplacement des secteurs (3,5) est constitué d'une structure (20) de réception du mandrin en position axiale verticale comprenant :
- des premiers moyens fixes (24,26) sur lesquels repose le secteur fixe (2)-,
- des deuxièmes moyens (29 à 35), mobiles, sur lesquels repose le secteur-clef (5), ces moyens étant déplaçables diamétralement au mandrin,
- et des troisièmes et quatrièmes moyens (45 à 49), mobiles, de support respectivement des deux secteurs articulés (3), lesdits troisièmes et quatrièmes moyens comprenant chacun un chariot (46) mobile intérieurement au mandrin et portant un moyen d'entraînement (49) sur lequel repose l'un desdits secteurs articulés (3).

4. Outillage suivant la revendication 2 ou 3, **caractérisé en ce que** les secteurs articulés (3) et le secteur-clef (5) sont munis de moyens (6,7) de verrouillage desdits secteurs en position aboutée.

5. Outillage suivant les revendications 3 et 4.; **caractérisé en ce que** lesdits deuxièmes moyens (29 à 35) portent des moyens (36 à 44) de commande desdits moyens de verrouillage (6,7).

6. Outillage suivant la revendication 5, **caractérisé en ce que** les moyens de verrouillage sont constitués de deux paires de verrous (19) de blocage mobiles en translation en sorte de solidariser ou désolidariser deux parties en regard (14', 14") de deux secteurs adjacents (3,5) à abouter et **en ce que** lesdits moyens de commande des moyens de verrouillage sont constitués par une paire de genouillères (37, 40) de commande de translation desdits verrous (19), commandées chacune par un vérin (43) porte par ladite potence (36).

7. Outillage selon l'une quelconque des revendications précédentes **caractérisé en ce que** le dispositif de commande est un dispositif automatique.

8. Outillage selon l'une quelconque des revendications précédentes **caractérisé en ce que**, le mandrin est tel que une fois le mandrin en forme, après blocage de verrous (6), les dispositifs de commande (37, 38) sont désolidarisables desdits verrous et le mandrin 1. enlevé du châssis (20) est auto-portant grâce à un verrouillage du secteur-clef (5) et adapté à être équipé de flasques (9a, 9b) de transport et rotation.

## Claims

1. A key-type moulding tool for producing in particular a splice-free air inlet with a substantially tubular shape, including:
- a key-type chuck comprising at least three sectors in the form of panels, namely at least two articulated sectors (S1, S2) retractable towards the centre of said chuck and a sector called a key sector (S3) independent of the other two sectors and able to be inserted between them, so as, by joining, to determine, through their external face, a continuous surface corresponding to the internal face of the air inlet;
- means for locking said sectors (S1 to S3) in joined position;
- and a device for controlling the relative movement of the movable sectors in order to place them either in a moulding position by joining the sectors or in a mould removal position (S'1 to S'3) by retraction of said sectors towards the inside of the chuck, **characterised in that**:
- the chuck is a self-supporting chuck and **in that** the control device can be disconnected from the chuck.

2. A tool according to claim 1, **characterised in that** it includes:
- a key-type chuck (1) comprising four sectors, namely a fixed sector (2) flanked by the other two sectors (3) symmetrical and articulated on the fixed sector (2), and a key sector (5) independent of the others and able to be inserted between the two articulated sectors (3) and means (6, 7) for locking the sectors in the joined position, the chuck thus being self-supporting;
- a device (29 to 35; 45 to 49) for controlling the relative movement of the sectors (3, 5) in order to place them either in a moulding position by joining all the sectors (2, 3, 5) or in a mould removal position by retraction of the three movable sectors (3, 5) towards the inside of said chuck (1), the control device being able to be disconnected from the chuck, and
- means for permitting the transportation and rotation of the chuck (1) in its moulding position, formed of two removable flanges (9a, 9b) able to be fitted to the two ends of the chuck, said flanges being connected by fixing tie rods (10) and provided at their centre with a socket (11) or the like for connection to means for driving said chuck in rotation about its axis.

3. A tool according to claim 2, **characterised in that** said device for controlling the movement of the sectors (3, 5) is formed of a structure (20) for receiving the chuck in the vertical axial position, including:
- first fixed means (24, 25) on which the fixed sector (2) rests,
- second movable means (29 to 35) on which the key sector (5) rests, these means being able to be moved diametrically to the chuck,
- and third and fourth movable means (45 to 49), for supporting respectively the two articulated sectors (3), said third and fourth means each including a carriage (46) able to move internally to the chuck and carrying a driving means (49) on which one of said articulated sectors (3) rests.

4. A tool according to claim 2 or 3, **characterised in that** the articulated sectors (3) and the key sector (5) are provided with means (6, 7) for locking said sectors in the joined position.

5. A tool according to claims 3 and 4, **characterised in that** said second means (29 to 35) carry means (36 to 44) for controlling said locking means (6, 7).

6. A tool according to claim 5, **characterised in that** the locking means is formed of two pairs of locking bolts (19) able to move in translation so as to connect or disconnect two facing parts (14', 14") of two adjacent sectors (3, 5) to be joined and **in that** said means for controlling the locking means are formed by a pair of toggles (37, 40) for controlling the translation of said bolts (19), each controlled by a ram (43) carried by said beam (36).

7. A tool according to any one of the preceding claims, **characterised in that** the control device is an automatic device.

8. A tool according to any one of the preceding claims, **characterised in that** the chuck is such that, once the chuck is formed, after locking of the bolts (6), the control devices (37, 38) can be disconnected from said bolts and the chuck (1) removed from the chassis (20) is self-supporting by virtue of a locking of the key sector (5) and adapted to be equipped with transportation and rotation flanges (9a, 9b).

## Patentansprüche

1. Segmentiertes Formwerkzeug zur Herstellung insbesondere von einem im Wesentlichen rohrförmigen Lufteinlass ohne Verbindungslasche mit:
- einem Futter mit Schlüssel, das mindestens drei Segmente in Form von Platten aufweist, insbesondere mindestens zwei gelenkige Segmente (S1, S2), die in das Zentrum des Spannfutters einziehbar sind, und ein Schlüsselsegment (S3) genanntes Segment, das von den beiden anderen Segmenten unabhängig ist und zwischen beiden eingeschoben werden kann, so dass sie so zusammengefügt sind, dass sie durch ihre Außenseite eine durchgehende Fläche bestimmen, die der Innenseite eines Lufteinlasses entspricht;
- Mitteln zum Verriegeln der Segmente (S1 bis S3) in der zusammengefügten Position;
- und einer Steuervorrichtung zur Bewegung der beweglichen Segmente relativ zueinander, um sie entweder in eine Position zum Formen durch Zusammenfügung der Segmente zu bringen oder in eine Position zum Aus-der-Form-nehmen (S'1 bis S'3) durch Zurückziehen der Segmente zum Inneren des Futters, **dadurch gekennzeichnet, dass**:
- das Futter ein selbsttragendes Futter ist und die Steuervorrichtung vom Futter lösbar ist.

2. Werkzeug nach Anspruch 1, **dadurch gekennzeichnet, dass** es aufweist:
- ein Futter mit Schlüssel (1) mit vier Segmenten, nämlich einem festen Segment (2), flankiert von zwei anderen symmetrischen und mit dem festen Segment (2) gelenkig verbundenen Segmenten (3) und einem von den anderen Segmenten unabhängigen Schlüsselsegment (5), das zwischen den beiden gelenkigen Segmenten (3) eingeschoben werden kann, und Mittel (6, 7) zur Verriegelung in der zusammengefügten Position der Segmente, wodurch das Futter selbsttragend wird;
- eine Steuervorrichtung (29 bis 35; 45 bis 49) zur Bewegung Segemente (3, 5) relativ zueinander, um sie entweder in eine Position zum Formen durch Zusammenfügung der Segmente (2, 3, 5) oder in eine Position zum Aus-der-Formnehmen durch Zurückziehen der drei beweglichen Segmente (3, 5) zum Inneren des Spannfutters (1) zu bringen, wobei die Steuervorrichtung vom Futter lösbar ist, und
- Mitteln zum Transport und der Versetzung des Futters (1) in Drehung in seiner Position zum Formen, bestehend aus zwei abnehmbaren Flanschen (9a, 9b), die an die beiden Enden des Futters anpassbar sind, wobei die Flansche über Befestigungsbolzen (10) verbunden sind und in ihrem Inneren mit einer Buchse (11) oder ähnlichem versehen sind zur Befestigung von Antriebsmitteln des Futters im Rotationsinn um seine Achse.

3. Werkzeug nach Anspruch 2, **dadurch gekennzeichnet, dass** die Steuervorrichtung zur Verschiebung der Segmente (3, 5) besteht aus einer Struktur (20) zur Aufnahme des Futters in axial vertikaler Position, die aufweist:
- erste feststehende Mittel (24, 25), auf denen das feste Segment (2) ruht,
- zweite bewegliche Mittel (29 bis 35), auf denen das Schlüsselsegment (5) ruht, und die entgegengesetzt zum Futter verschiebbar sind,
- und dritte und vierte bewegliche Mittel (45 bis 49) zur Stützung der beiden gelenkigen Segmente (3), wobei die Mittel jeweils einen beweglichen Schlitten (46) innerhalb des Futters aufweisen und ein Antriebsmittel (49) tragen, auf dem eines der beiden gelenkigen Segmente (3) ruht.

4. Werkzeug nach Anspruch 2 oder 3, **dadurch gekennzeichnet, dass** die gelenkigen Segmente (3) und das Schlüsselsegment (5) mit Mitteln (6,7) zur Verriegelung der Segmente in der Anschlagsposition versehen sind.

5. Werkzeug nach Anspruch 3 oder 4, **dadurch gekennzeichnet, dass** die zweiten Mittel (29 bis 35) Mittel (36 bis 44) zur Steuerung der genannten Verriegelungsmittel (6, 7) aufweisen.

6. Werkzeug nach Anspruch 5, **dadurch gekennzeichnet, dass** die Verriegelungsmittel aus zwei Paaren von Riegeln (19) bestehen, die translatorisch beweglich sind, um die beiden gegenüberliegenden Abschnitte (14', 14") zweier benachbarter Segmente (3, 5), die aneinander anliegen sollen, zu verbinden oder zu lösen, und dass die Mittel zum Steuern der Verriegelungsmittel aus einem Paar Kniehebel (37, 40) zur Steuerung der Translation der Riegel bestehen.

7. Werkzeug nach einem der vorhergehenden Ansprüche, **dadurch gekennzeichnet, dass** die Steuervorrichtung einen automatische Vorrichtung ist.

8. Werkzeug nach einem der vorhergehenden Ansprüche, **dadurch gekennzeichnet, dass** das Futter derart gestaltet ist, dass, wenn es in Form gebracht ist, nach Arretierung der Riegel (6) die Steuervorrichtungen (37, 38) von den Riegeln abnehmbar sind und das vom Rahmen (20) abgenomme Futter (1) dank einer Verriegelung des Schlüsselsegments (5) selbsttragend und geeignet ist, mit Transport- und Drehflanschen (9a, 9b) versehen zu werden.
